(19) **Europäisches Patentamt / European Patent Office / Office européen des brevets**

(11) **EP 1 182 286 B1**

(12) **EUROPEAN PATENT SPECIFICATION**

(45) Date of publication and mention
of the grant of the patent:
**22.07.2009 Bulletin 2009/30**

(51) Int Cl.:
***D04H 3/16*** *(2006.01)*

(21) Application number: **01850141.1**

(22) Date of filing: **14.08.2001**

(54) **Resin molded article having a spring structure and method of producing this resin molded article**

Formteil aus Kunststoff mit einer elastischen Struktur und Verfahren zur Herstellung dieses Teils

Article moulé en plastique ayant une structure élastique et procédé de fabrication de cet article

(84) Designated Contracting States:
**DE ES FR GB IT**

(30) Priority: **16.08.2000 JP 2000246907**

(43) Date of publication of application:
**27.02.2002 Bulletin 2002/09**

(73) Proprietor: **Ein Kohsan Co., Ltd.**
**Shinagawa-ku,**
**Tokyo (JP)**

(72) Inventors:
• **Nishibori, Sadao**
**Shinagawa-ku,**
**Tokyo (JP)**

• **Nakamura, Yuichiro**
**Motosu-gun,**
**Gifu (JP)**

(74) Representative: **Andersson, Per Rune**
**Albihns AB**
**P.O. Box 142**
**401 22 Göteborg (SE)**

(56) References cited:
| | |
|---|---|
| **US-A- 3 687 759** | **US-A- 3 936 337** |
| **US-A- 4 172 174** | **US-A- 4 351 683** |
| **US-A- 5 879 776** | **US-A- 5 972 463** |

EP 1 182 286 B1

## EP 1 182 286 B1

**Description**

BACKGROUND OF THE INVENTION

1. Field of the Invention

This invention relates to a resin molded article with a spring structure and a method of producing the same, and more particularly to a resin molded article with a spring structure, which is excellent in shock resistance and load capacity and is also suitable for use as a filter medium, and a method of producing the same.

2. Description of the Related Art

At present, a polyurethane foam is a mainstream material of cushions for seats and beds.

Further, a cushion has been proposed in Japanese Laid-Open Patent Publication (Kokai) No. 2000-51011, which is produced by partially bonding synthetic fibers and natural fibers of 1 to 20 deniers with each other, by a synthetic rubber adhesive.

Still further, a seat cushion pad for an automotive vehicle has been disclosed in Japanese Patent No. 2995325, in which a seat surface part is formed of a high resilience foam having a one layer structure, and the high resilience foam is made of a polyurethane foam which contains 10 wt% or less of tolylene diisocyanate (TDI), and the remainder isocyanate formed by diphenylmethane diisocyanate.

Generally, polyurethane foams sink deeply, and the user gets fatigued if he sits thereon for a long time. Further, it is difficult to recycle the polyurethane foams since they are thermoset resins. Therefore, polyurethane foams can only be recycled by crushing them into chips by a crusher, and bonding the chips into a material called chip foam (ribbon dead foam), or just burned for recovery of thermal energy. The method of disposal of polyurethane foams includes landfilling and incineration. However, stable lands cannot be created by using polyurethane foams since they are low in bulk density and soft, and hence landfill sites suitable therefor are limited. Further, incineration of polyurethane foams causes much damage to incinerators, and generates toxic gases which are required to be eliminated at high costs. However, there has been no alternate material which has a performance as high as a polyurethane foam when used as a cushioning material for seats, beds, etc. and which can be manufactured at low costs.

Further, polyurethane foams are so flexible that when used for seat cushion pads for an automotive vehicle, they cause a user to have feelings of being heaved from below and being rocked. Therefore, long hours of driving causes the user to feel numb at feet and get much fatigued. In addition, polyurethane foams have the following problems to be solved:

Polyurethane foams are difficult to clean and recycle. An amine catalyst used in manufacturing the same is trapped in the foams thereof, causing bad smell.

A polyurethane foam has a heat storage property, and is liable to be stuffy, and there is a fear that if the polyurethane foam is exposed to intensive light for a long time, it may start to burn. Moreover, when burned, it generates gases of cyanogen, hydrogen chloride, and ammonia.

Although year 2020 is set to a deadline of abolition of use of CFCs substitute which is used as a foaming agent, there is not yet found an alternate agent that is more excellent in foaming performance than the CFCs substitute.

TDI (Tolylene Diisocyanate) which is an isocyanate normally used for producing soft polyurethane foams is a very harmful material and Notification No. 25 of the Ministry of Labor of Japanese Government prescribes that TDI should be used at a concentration of 0.005 ppm or less. In many actual manufacturing sites, thorough control of TDI is not carried out, causing damage to health of workers.

In the above-mentioned seat cushion pad for an automotive vehicle disclosed in Japanese Patent No. 2995325 is improved in the characteristics of the soft polyurethane foam, but has the drawbacks of polyurethane foams.

Although the cushion proposed in Japanese Laid-Open Patent Publication (Kokai) No. 2000-51011 offers advantages in that it has excellent air permeability and is cleanable, it suffers from disadvantages in that it has a low durability, a manufacturing method thereof is complicated, and a processing cost is remarkably high. Further, the rubber adhesive and a crosslinkable polyurethane are thermoset resins which are difficult to recycle, and since the cushion is not of a single composition, it is difficult to recycle the cushion.

A cushion disclosed in Japanese Patent No. 2548477 is produced by fusion-bonding high-melting polyester fibers with low-melting thermoplastic elastomers, and hence suffers from problems to be solved in that the cushion is difficult to recycle, a manufacturing method thereof is complicated, and a processing cost is remarkably high.

US 5972463 discloses multicomponent filaments having a uniform thickness and density.

The invention has been made as a solution to the above problems, and an object thereof is to provide a resin cushion element with a spring structure which can be recycled, manufactured at reduced costs, and does not sink deep so that it does not fatigue the user even after it is used for a long time, for being used in place of the polyurethane foam which is difficult to recycle and suffers from the problems described hereinabove even in the disposal thereof.

Further, the invention permits resins, such as PE and the like, which are regenerated for reusing thermoplastic resin vessels for packaging edible oil and waste agricultural plastic films, to be regenerated as articles with high added value. The resin cushion element with a spring structure according to the invention can be recycled as many times as required. Further, the cushion structure according to the invention is produced by using, as a material, a mixture of a polyolefin resin, such as PE and PP, and a vinyl acetate resin (hereinafter referred to as "VAC"), or an ethylene vinyl acetate copolymer (hereinafter referred to as "EVA"), or styrene butadiene styrene (hereinafter referred to as "SBS"), and another object of the invention is to provide a resin molded article with a spring structure, which is excellent in cushioning properties when used for a cushion of a bed or a seat. Further, still another object of the invention is to provide a method which is capable of manufacturing, by easy molding steps, a molded article which is high in the freedom of shaping thereof, and has desired physical properties, such as load withstanding strength (load capacity) and shock resistance and the like.

## SUMMARY OF THE INVENTION

A resin molded article 30 having a spring structure according to claim 1 comprises a three-dimensional structure at a predetermined bulk density (hereinafter simply referred to as the "three-dimensional structure"), the three-dimensional structure being formed by contacting, entwining, and gathering adjacent ones of random loops or curls of solid and/or hollow continuous filaments and/or of solid and/or hollow short filaments made from a mixture of a polyolefin resin and VAC, EVA or SBS.

This invention is also characterized in that the three-dimensional structure has voids providing low and high densities.

The mixture ratio of the vinyl acetate content of the polyolefin resin to VAC or EVA is 70 to 97 wt% to 3 to 30 wt%, preferably, 80 to 90 wt% to 10 to 20 wt%. If the VAC content is equal to or lower than 3 wt%, the impact resilience of the three-dimensional structure is low, whereas when the VAC content is equal to or higher than 30 wt%, the thermal characteristics of the structure are degraded.

The mixture ratio of the polyolefin resin to SBS is 50 to 97 wt% to 3 to 50 wt%, preferably, 70 to 90 wt% to 10 to 30 wt%. The polyolefin resin may be a regenerated resin.

The solid continuous filaments and/or the solid short filaments have a diameter e.g. of 0.3 mm to 3.0 mm, preferably 0.7 to 1.0 mm, and the hollow continuous filaments and/or hollow short filaments have a diameter of 1.0 mm to 3.0 mm, preferably 1.5 to 2.0 mm. Further, the three-dimensional structure has a bulk density e.g. of 0.001 to 0,08 g/cm$^3$. Although it is possible to form the three-dimensional structure only by solid filaments or hollow filaments, if a mixture thereof is used, both of the filaments have the mixture ratio of solid filaments (referred to as "X") to hollow filaments (referred to as "Y ") such that $0 \leqq X \leqq 50$, and $50 \leqq Y \leqq 100$. Further, if hollow filaments are used in a central portion of the structure, and covered with solid ones, a tactile impression can be increased.

The present invention relates to a cushion material for a seat of an automotive vehicle or a bed, for instance. When the bulk density of the three-dimensional structure is equal to or lower than 0.001 g/cm$^3$, strength thereof is decreased. If the bulk density is equal to or higher than 0.08 g/cm$^3$, it is impossible to reduce a weight thereof, and elasticity thereof is lost.

If the diameter of the filaments is equal to or smaller than 0.3 mm, sturdiness of the filaments is lost, and increased number of portions of the filaments are fusion-bonded to thereby reduce the void ratio of the three-dimensional structure. Inversely, if the diameter of the filaments is equal to or larger than 3.0 mm, the filaments are excessively sturdy, and hence loops or curls are not formed, so that reduced number of potions of the filaments are fusion-bonded to thereby decrease the strength of the three-dimensional structure. The diameter of hollow filaments is 1.0 mm to 3.0 mm, preferably 1.5 mm to 2.0 mm. If the ratio of hollow filaments is equal to or smaller than 10 %, it does not contribute to reduction of the weight of the structure, whereas if the same is equal to or larger than 80 %, cushioning properties of the structure are degraded.

To maintain elasticity and strength of the structure as a cushion as well as reduce the weight thereof, the void ratio of the three-dimensional structure is required to be 91 to 99 %, preferably 93 to 96 %.

$$[\text{void ratio (\%)}] = (1 - [\text{bulk density}] / [\text{density of resin}]) \times 100$$

This invention further relates to a method of producing a resin molded article according to claim 11.

BRIEF DESCRIPTION OF THE DRAWINGS

The object and advantages of the invention will become understood from the following detailed description of preferred embodiments thereof in connection with the accompanying drawings in which like names designate like elements, and in which:

FIG. 1 is a diagram schematically showing processes of manufacturing resin molded articles having a spring structure, according to an embodiment of the invention;
FIG. 2 is a diagram schematically showing an embodiment of an apparatus for implementing the method according to the invention;
FIG. 3 is a diagram schematically showing another embodiment of the apparatus for implementing the method according to the invention;
FIG. 4 is a diagram schematically showing still another embodiment of the apparatus for implementing the method according to the invention;
FIG. 5 is a graph showing a load-compression deflection ratio according to Example 1;
FIG. 6 is a graph showing a load-compression deflection ratio according to Example 2;
FIG. 7 is a graph showing a load-compression deflection ratio according to Example 3;
FIG. 8 is a graph showing a load-compression deflection ratio according to Example 4;
FIG. 9 is a graph showing a load-compression deflection ratio according to Example 5;
FIG. 10 is a graph showing a load-compression deflection ratio according to Example 6;
FIG. 11 is a graph showing a load-compression deflection ratio according to Example 7;
FIG. 12 is a graph showing a load-compression deflection ratio according to Example 8;
FIG. 13 is a graph showing a load-compression deflection ratio according to Example 9;
FIG. 14 is a graph showing a load-compression deflection ratio according to Example 10;
FIG. 15 is a graph showing a load-compression deflection ratio according to Example 11;
FIG. 16 is a graph showing a load-compression deflection ratio according to Comparative Example 1;
FIG. 17 is a graph showing a load-compression deflection ratio according to Comparative Example 2;
FIG. 18 is a graph showing a load-compression deflection ratio according to Comparative Example 3; and
FIG. 19 is a graph showing a load-compression deflection ratio according to Comparative Example 4;.

DETAILED DESCRIPTION OF THE PREFERRED EMBODIMENT

(Three-dimensional Structure)

A three-dimensional structure employed in the invention has voids and is formed of continuous filaments and/or e.g. short filaments that are randomly entwined and gathered. The continuous and/or short filaments form a plurality of loops or curls. The above three-dimensional structure can be formed as follows: A thermoplastic resin, such as polyethylene, for instance, and VAC, EVA or SBS are metered and mixed using a tumbler or a cutting feeder. The mixture is subjected to melt-extrusion at a predetermined speed through a plurality of nozzles, taken off by a winder, referred to hereinafter, and formed into solid and/or hollow continuous filaments of 600 deniers to 90,000 deniers, preferably 3,000 deniers to 30,000 deniers, more preferably 6,000 deniers to 10,000 deniers. The filaments in a fused state are caused to form loops having a diameter of 1 mm to 10 mm, preferably 1 mm to 5 mm, and are taken off by the winder within water while bringing adjacent ones of the filaments into contact with each other within the water to be entwined forming random loops. In taking off the filaments, the take-off speed of the winder is adjusted to a low take-off speed by the winder at intervals of e.g. 3 to 5 m such that there is formed a three-dimensional spring structure with a thickness of 10 mm to 200 mm and a width of 2,000 mm, the three-dimensional spring structure having high-density portions having a high bulk density with a length of 30 cm to 50 cm in a longitudinal direction formed when the extruded material is received at the low take-off speed and low bulk density portions other than the high density portions. The contacted and entwined portions of the filaments are at least partially fused and bonded to one another.
The continuous and/or short filaments are preferably made of a thermoplastic elastomer, e.g. an elastomer of polypropylene.
The three-dimensional structure can be formed such that it has low density portions and high density portions in bulk density as required. The bulk density at the low density portions is 0.005 to 0.03 g/cm$^3$, preferably 0.008 to 0.03 g/cm$^3$, particularly preferably 0.01 to 0.03 g/cm$^3$, while the bulk density at the high density portions is 0.03 to 0.08 g/cm$^3$, preferably 0.04 to 0.07 g/cm$^3$, particularly preferably 0.05 to 0.06 g/cm$^3$.
The void ratio of the three-dimensional structure at the low density portions is 96 to 99 %, preferably 97 to 99 %, and particularly preferably 97 to 98 %, while the void ratio at the high density portions is 91 to 97 %, preferably 92 to 96 %, and particularly preferably 93 to 94 %.

(Manufacturing Method)

In the method of producing the resin molded article 30 having a spring structure, according to the invention, will be described. It is preferable that resin materials are dry-blended with each other by a tumbler, referred to hereinafter, or a metering feeder, or mixed or melted and mixed with each other to form pellets, followed by being fed to a hopper of an extruder.

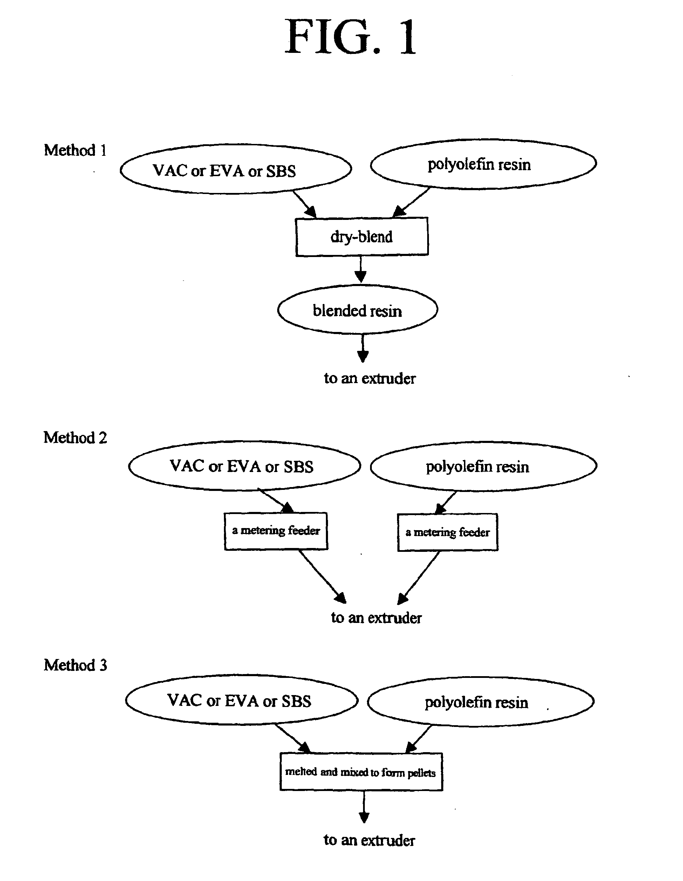

Resin materials, e.g. polyethylene and SBS were blended with each other by a tumbler (KR blender made by Katoriki Seisakusho) at 40 rpm for 15 minutes (FIG. 1).

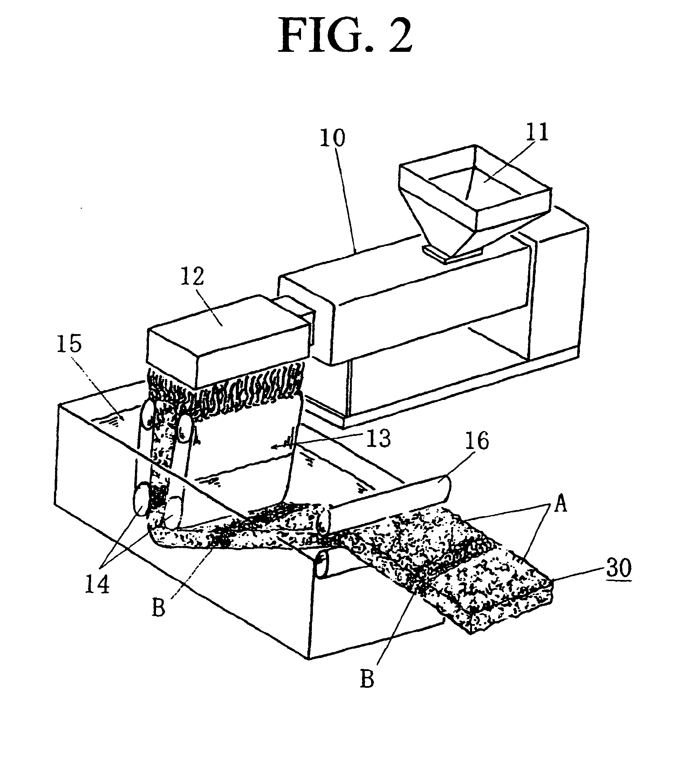

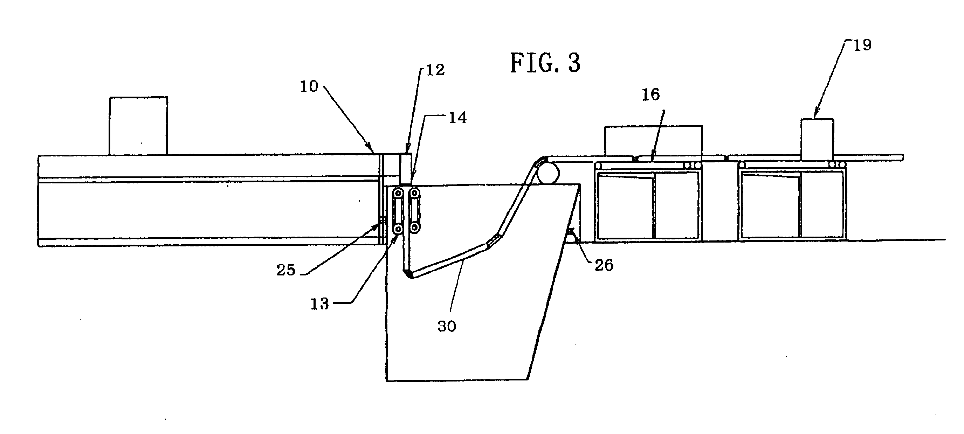

The above mixture was fed into a φ65 mm uniaxial extruder 10 via a hopper 11 thereof, and taken off at 60 rpm at a take-off speed of 1.0/min. Resins were melted and kneaded at a temperature of 200°C for Examples 1 to 6, and at a temperature of 260°C for Examples 7 to 9, and extruded through a lot of injection ports formed in a molding die 12 and having a predetermined diameter. More specifically, the mixture is subjected to melt extrusion at a predetermined speed through a plurality of nozzles, taken off by the winder, referred to hereinafter, and formed into solid or hollow continuous filaments having a predetermined diameter. The filaments in a fused state are caused to form loops, and are taken off by the winder within water while bringing adjacent ones of the filaments into contact with each other within the water so as to be entwined forming random loops. When taking off the filaments, the take-off speed of the winder is adjusted to a low speed at predetermined intervals. For instance, if the take-off speed of the feed rollers 14 and 14 of the winder is adjusted to a low speed for a preset time period from each preset time by using a timer or the like, it is possible to obtain the resin molded article 30 having a spring structure with high and low density portions, which includes high bulk density portions with a predetermined length in the direction of the length thereof at predetermined space intervals. That is, the resin molded article 30 having a spring structure can be manufactured by forming a three-dimensional spring structure, referred to hereinafter, which includes the high bulk density portions (high density portions B) formed when the take-off speed is low, and the other low density portions (low density portions A) (FIG. 2). The taken-off material randomly curled or looped is solidified in the water in a bath 15 and taken up by take-up rollers 16 and 16, to provide the resin molded article 30 having a spring structure. The thickness and bulk density of the extruded material are set between the feed rollers 14 and 14 of the winder 13 in the bath 15. When the material is taken off, it is sometimes difficult to bend it by the feed rollers 14 and 14. To eliminate this inconvenience, by forming still lower density portions than the low density portions, the material is bent at the still lower density portions and drawn out of the water. (FIG. 3).

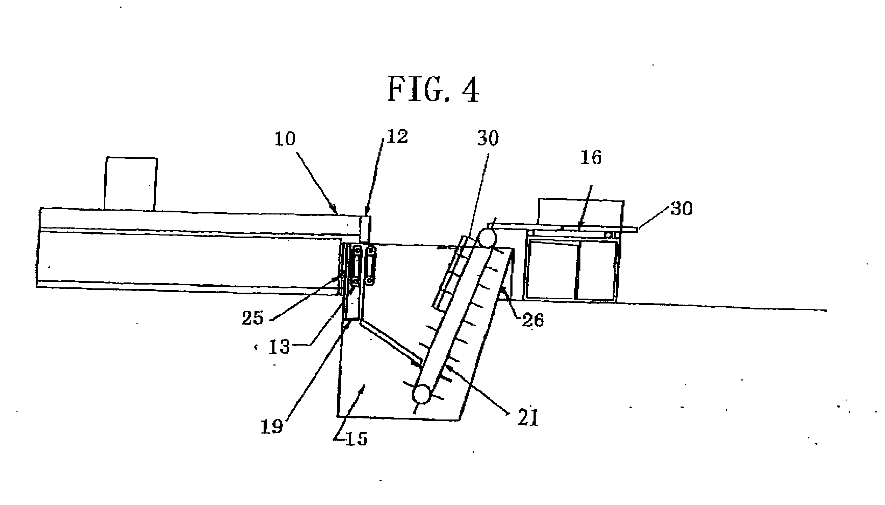

FIG. 4, shows a cutting device arranged in the bath 15 for cutting the molded form. The cutting device 19 is positioned in the vicinity of the winder 13 at a location downward thereof. Arranged at an inner wall of the bath 15 opposed to the cutting device 19 is a transport device 21 comprised of a conveyer having a lot of engaging projections for insertion into voids of each single molded form 30 cut off at a cutting portion. In the figure, reference numerals 25 and 26 designate a water supply valve and a drainage valve, respectively (FIG. 4). The filaments are randomly curled or looped, solidified in the water in the bath 15 and taken up by the take-up rollers 16 and 16, as the resin molded article 30 having a spring structure.

As described above, the resin molded article 30 having a spring structure is obtained which has, for instance, a thickness of 30 mm and includes a high density portion with a length of 30 cm after every low density portion having a length of 3 m.

The resin molded article 30 having a spring structure can be manufactured by using the above-mentioned three-dimensional structure which includes one type of property or a combination of a plurality of types of properties different from each other.

Examples

Examples of molded products which are different in compounding ratio between resin materials

Examples of spring structures were produced by using combinations of resin materials PE + VAC, PE + EVA, and PP + SBS, while varying the compounding ratio of each of the combinations.

The compounding ratios, manufacturing conditions, and characteristic values, such as bulk density, are shown in Table 1, Table 2, and Table 3, respectively.

Examples 1 to 3: PE + VAC

Examples 4 to 6: PE + EVA

Examples 7 to 9: PP + SBS

Table 1
Compounding ratios in Examples 1 to 9

| | PE(wt%) | PP(wt%) | VAC (wt%) | EVA (wt%) | SBS (wt%) |
|---|---|---|---|---|---|
| Example 1 | 95 | | 5 | | |
| Example 2 | 90 | | 10 | | |
| Example 3 | 70 | | 30 | | |
| Example 4 | 89 | | | 11 | |
| Example 5 | 78 | | | 22 | |
| Example 6 | 34 | | | 66 | |
| Example 7 | 95 | | | | 5 |
| Example 8 | | 90 | | | 10 |
| Example 9 | | 70 | | | 30 |

Table 2
Manufacturing conditions of Examples 1 to 9

| Molding die | Discharge rate | Take-off speed |
|---|---|---|
| 300 mm (W) × 50 mm (T) | 28 kg/h | 1.0 m/min |

Table 3
Characteristic values of Examples 1, to 9

| Bulk density | Diameter | Area | Thickness |
|---|---|---|---|
| 0.03 g/cm$^3$ | 1.5 mm (hollow) | 300×300mm | 50mm |

Examples of manufactured products which are different in bulk density

Spring structures changed in bulk density were produced from resin materials having the same compounding ratio of PE : VAC = 90 : 10. The process of producing the spring structures will be described. The resin materials were blended by using a tumbler called KR blender (type: KRT-100) made by Katoriki Seisakusho, at 40 rpm for 15 minutes. The spring structures were molded by using the φ65 mm uniaxial extruder, and taken off at a screw rotational speed of 60 rpm, and at take-off speeds of 3.1 m/min. and 0.6 m/min. The temperature of the resins was 200°C.
The compounding ratios between the resin materials, manufacturing conditions, and characteristic values, such as bulk density, are shown in Table 4, Table 5, and Table 6, respectively.

Examples 10 and 11 (PE+VAC)

Table 4
Compounding ratios in Examples 10 and 11

| | PE(wt%) | VAC(wvt%) |
|---|---|---|
| Example 10 | 90 | 10 |
| Example 11 | 90 | 10 |

Table 5
Manufacturing conditions of Examples 10 and 11

|  | Molding die | Discharge rate | Take-off speed |
|---|---|---|---|
| Example 10 | 300 mm (W) × (T) | 28kg/h | 3.1m/min |
| Example 11 | 300 mm (W)×(T) | 28kg/h | 0.6m/min |

Table 6
Characteristic values of Example 10 and 11

|  | Bulk density | Diameter | Area | Thickness |
|---|---|---|---|---|
| Example 10 | 0.01 g/cm$^3$ | 1.5 mm (hollow) | 300×300 mm | 50 mm |
| Example 11 | 0.05 g/cm$^3$ | 1.5 mm (hollow) | 300×300 mm | 50 mm |

Comparative Examples

Polyurethane foam

A soft polyurethane foam which is a mainstream material for a cushion element was prepared as Comparative Example 1. The manufacturing conditions and product characteristics of the soft polyurethane are shown in Table 7.

Comparative Example 1 (polyurethane foam)

Table 7
Main raw material and manufacturing conditions of Comparative Example 1

| Molding method | | Cold mold foam |
|---|---|---|
| Polyol | type | Polyether polyol (terminal 1st class-OH) |
|  | functional group number | 3 |
|  | molecular weight | 4500-6000 |
| Foam stabilizer | | Low-activity silicon foam stabilizer |
| Isocyanate | | TDI-80 |
| Foaming machine | | Foaming machine for few ingredient (2 to 3) |
| Die temperature | | |
|  | during infection | 50°C |
|  | during mold release | 50°C |
| curing time | | 14 min. |

Conventional spring structure

PP (non other composition is added).
Spring structures were produced only from the resin material PP by varying the bulk density.
The spring structures were molded by using the φ65 mm uniaxial extruder, and taken off at a screw rotational speed of 60 rpm, and at take-off speeds of 0.6 m/min, 1.0 m/min and 3.1 m/min. The temperature of the resin was 260°C. The compounding ratios, manufacturing conditions, and characteristic values, such as bulk density, are shown in Table 8, Table 9, and Table 10, respectively.

Comparative Examples 2, 3, and 4 (only PP)

Table 8

Compounding ratios of Comparative Examples 2 to 4

| | PP (wt%) |
|---|---|
| Comparative Example 2 | 100 |
| Comparative Example 3 | 100 |
| Comparative Example 4 | 100 |

Table 9

Manufacturing conditions of Comparative Examples 2 to 4

| | Molding die | Discharge rate | Take-off speed |
|---|---|---|---|
| Comparative Example 2 | 300 mm (W) $\times$ 50 mm (T) | 28 kg/h | 3.1m/min. |
| Comparative Example 3 | 300 mm (W) $\times$ 50 mm (T) | 28 kg/h | 1.0m/min. |
| Comparative Example 4 | 300 mm (W) $\times$ 50 mm (T) | 28kg/h | 0.6m/min. |

Table 10

Characteristic values of Comparative Examples 2 to 4

| | Bulk density | Diameter | Area | Thickness |
|---|---|---|---|---|
| Comparative Example 2 | 0.01 g/cm$^3$ | 1.5 mm (hollow) | 300 mm $\times$ 300 m | 50 mm |
| Comparative Example 3 | 0.03 g/cm$^3$ | 1.5 mm (hollow) | 300 mm $\times$ 300 m | 50 mm |
| Comparative Example 4 | 0.05 g/cm$^3$ | 1.5 mm (hollow) | 300 mm $\times$ 300 m | 50 mm |

Tests

In the tests, the following properties are revealed.

Test 1: Compression characteristic
Test 2: Residual distortion after repeated compression
Test 3: Impact resilience ratios

Test 1: Compression characteristics

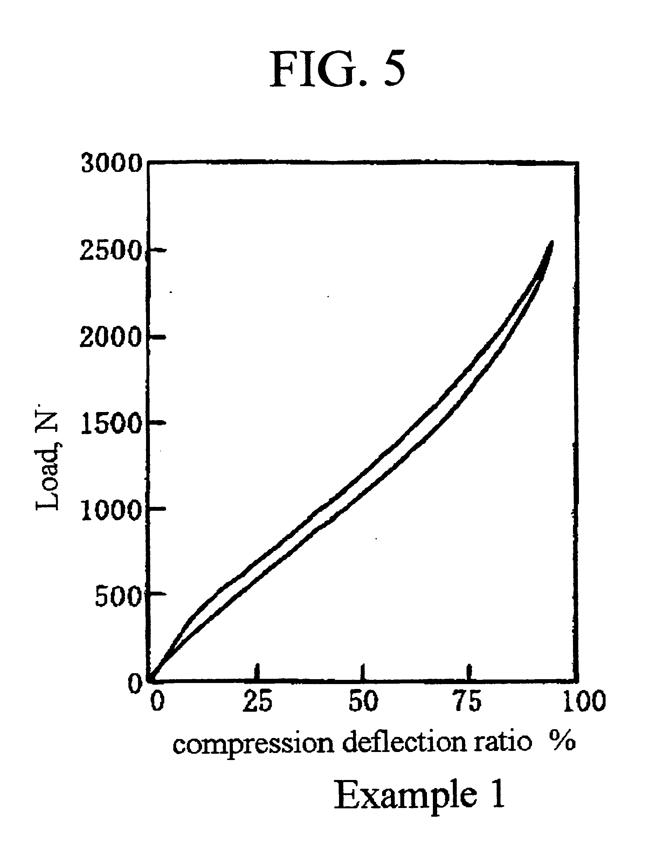

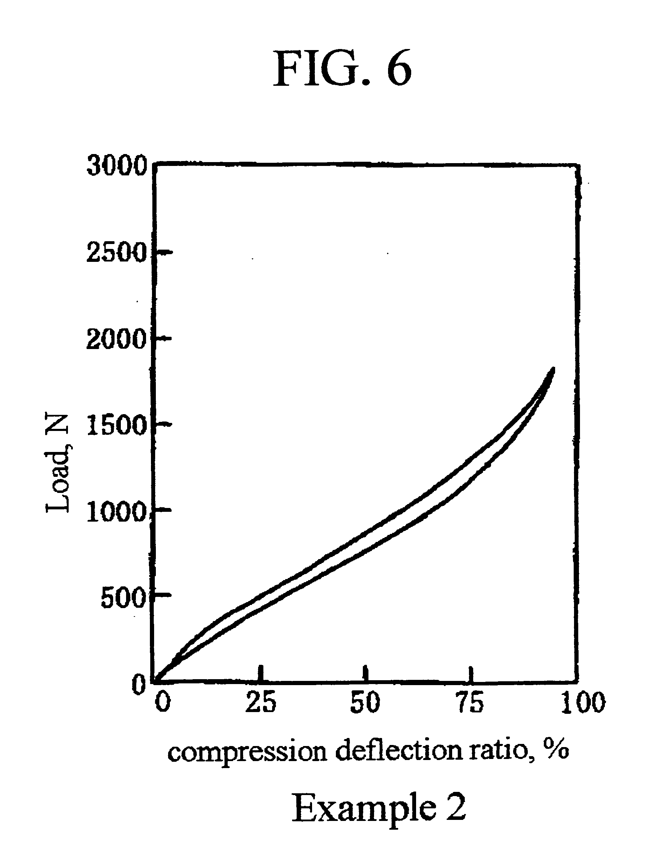

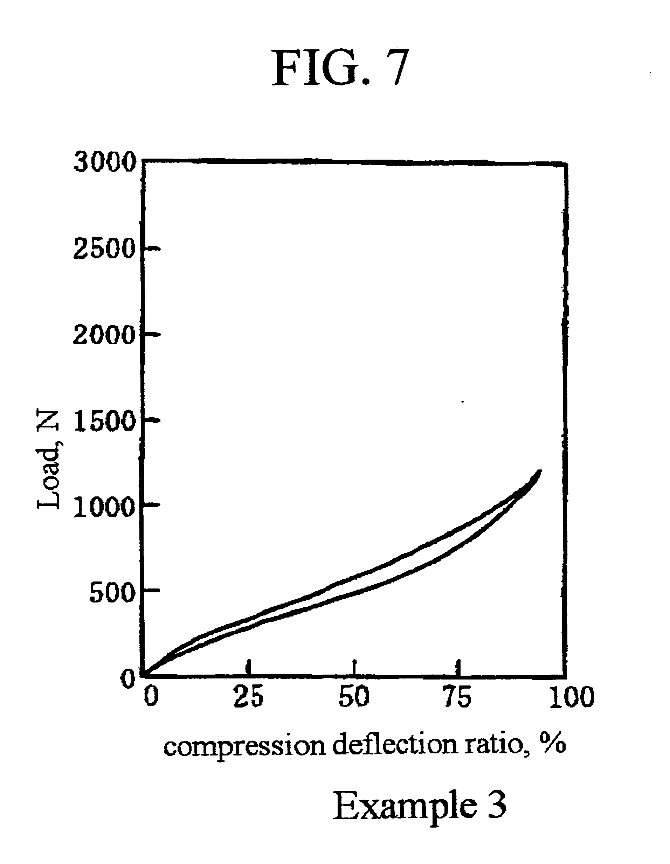

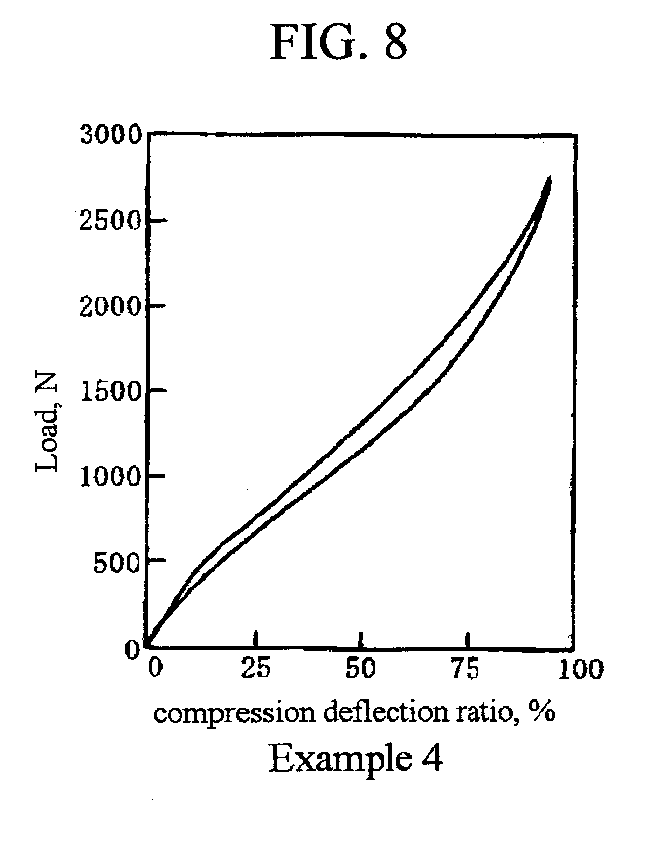

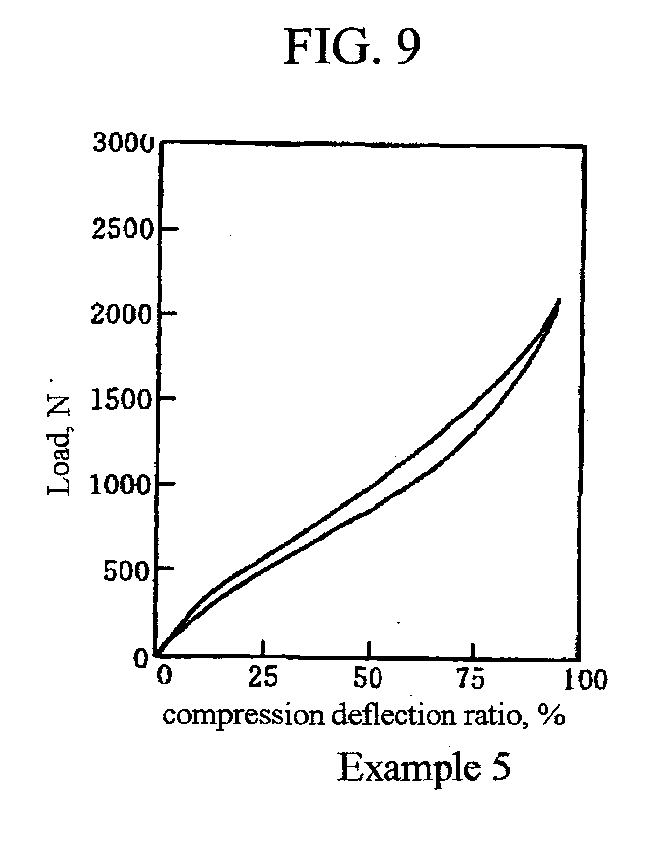

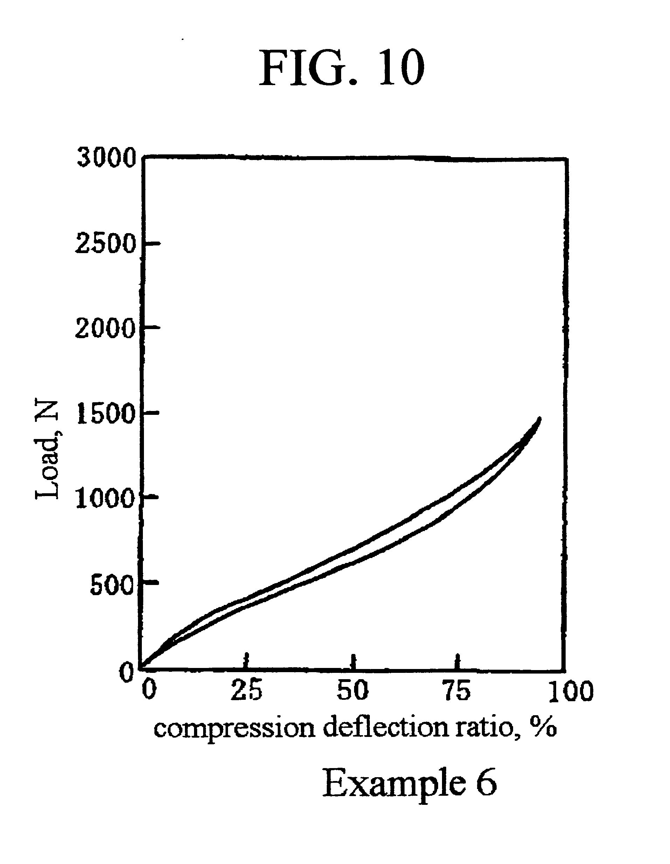

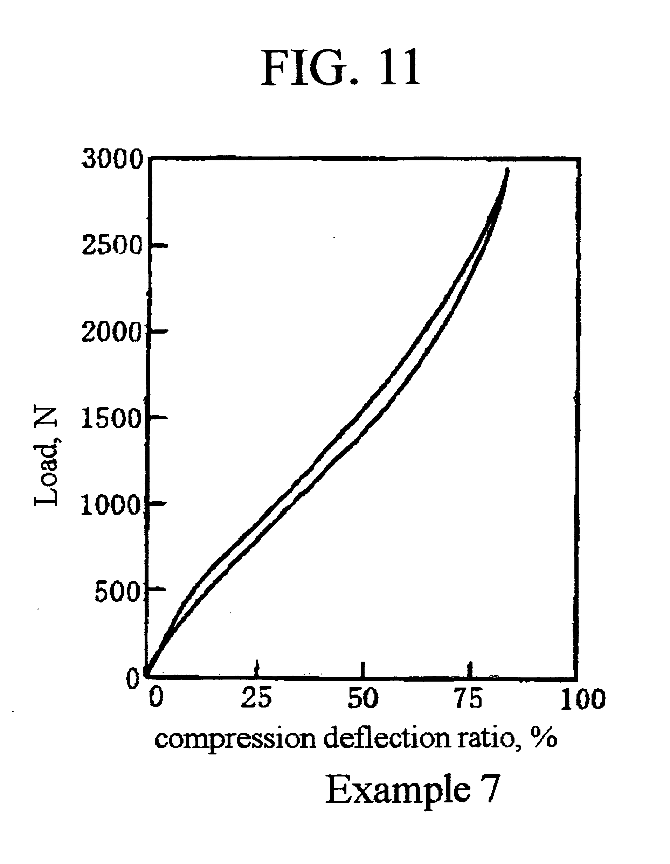

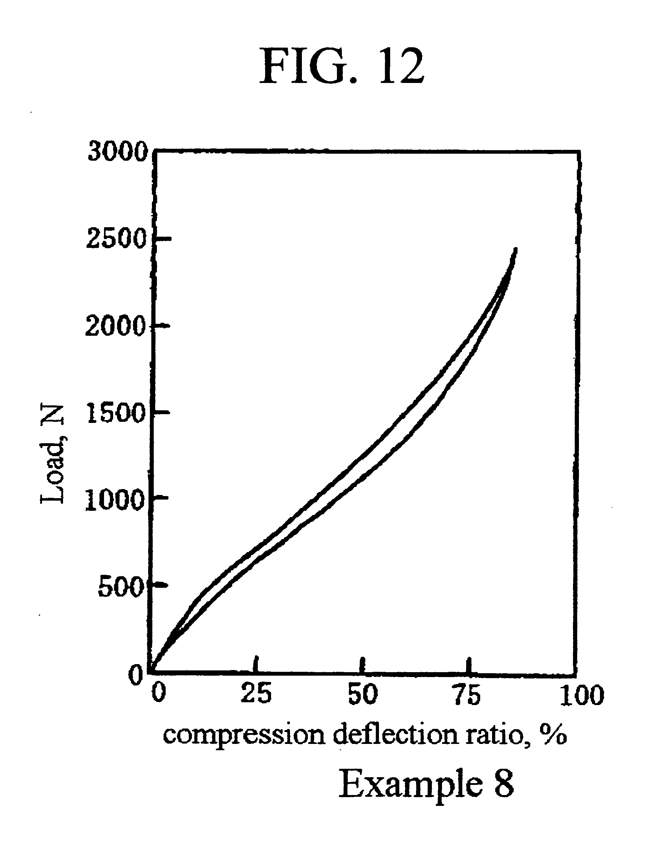

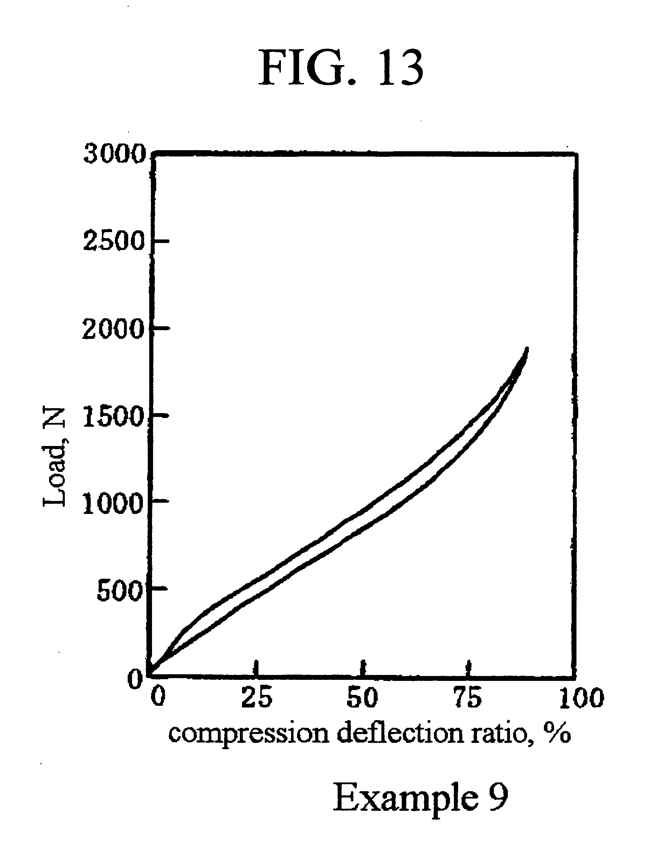

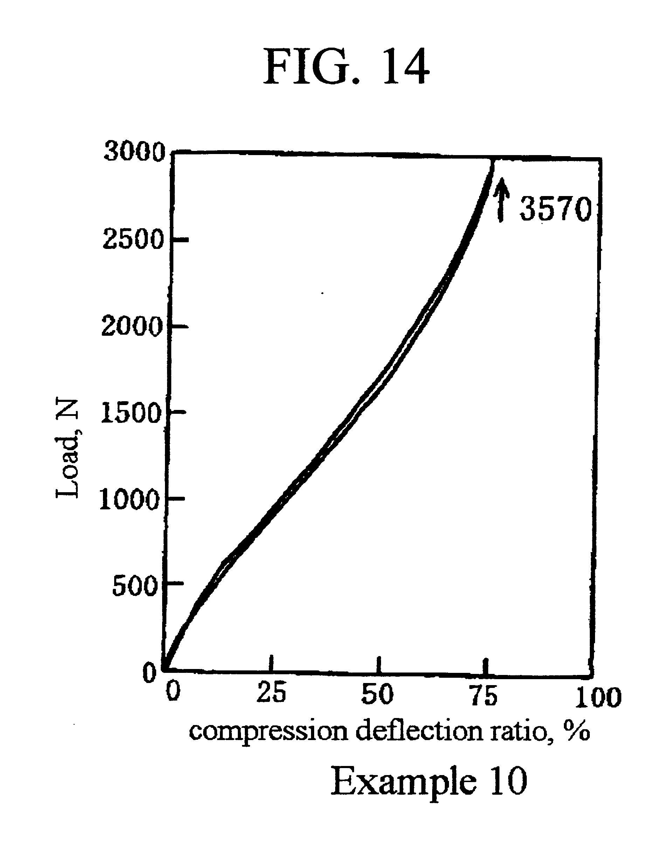

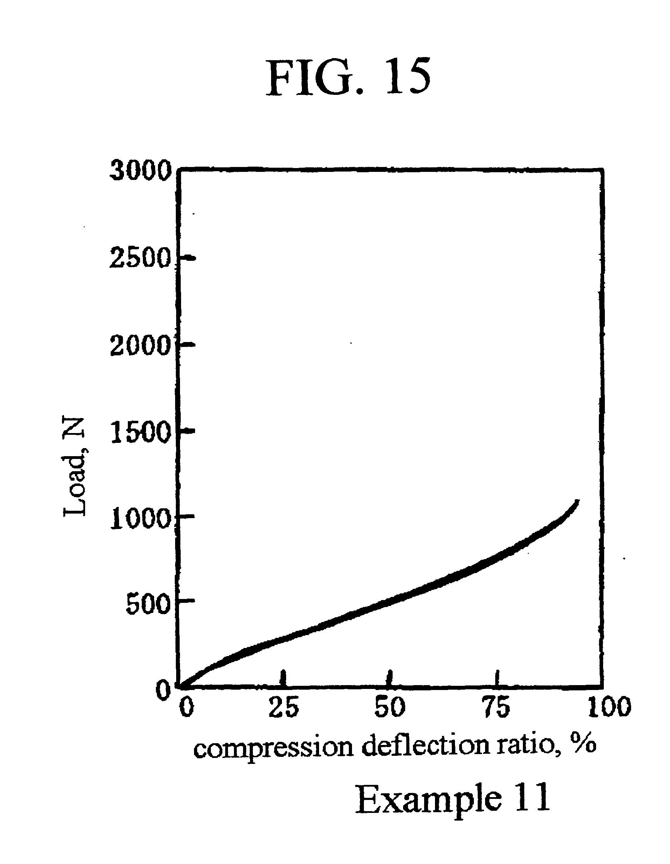

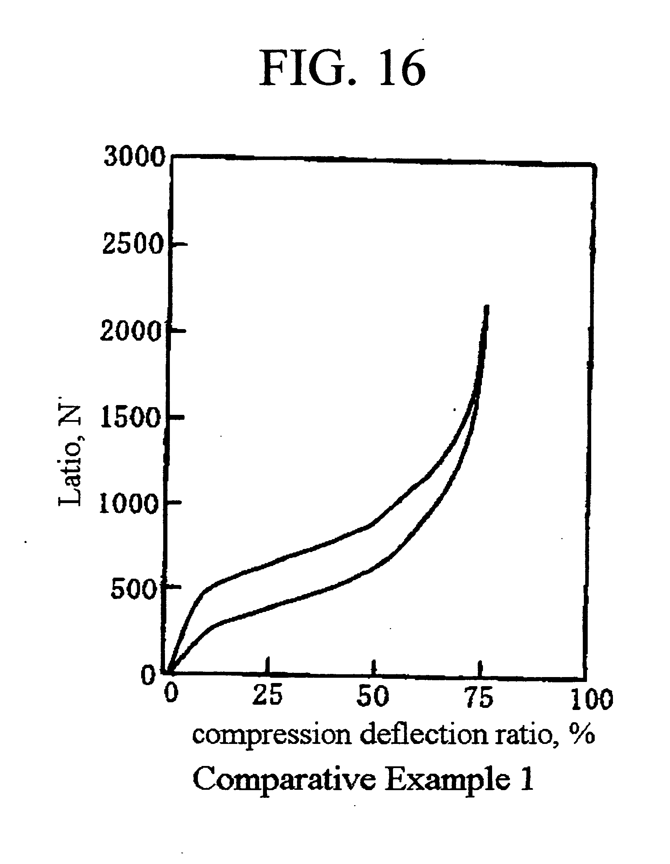

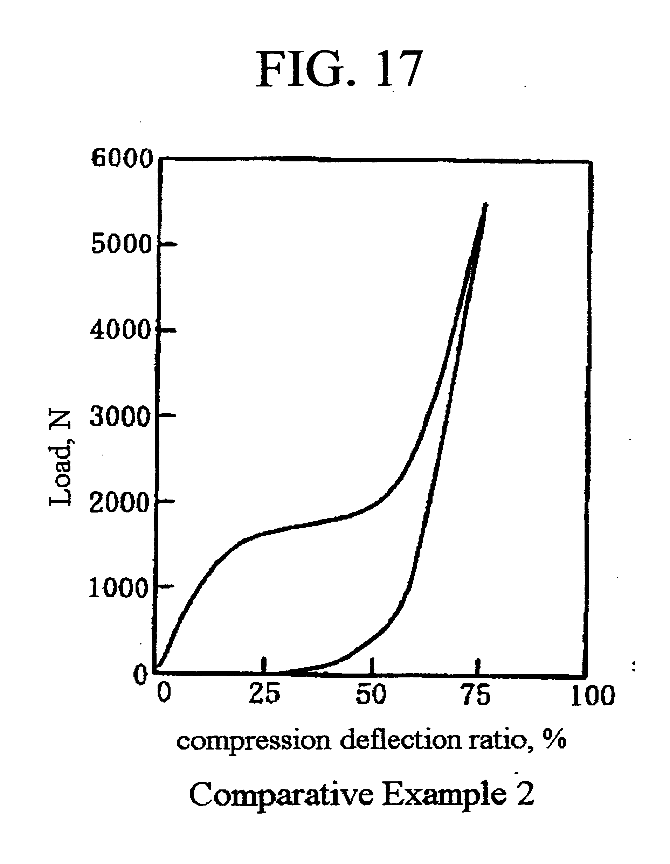

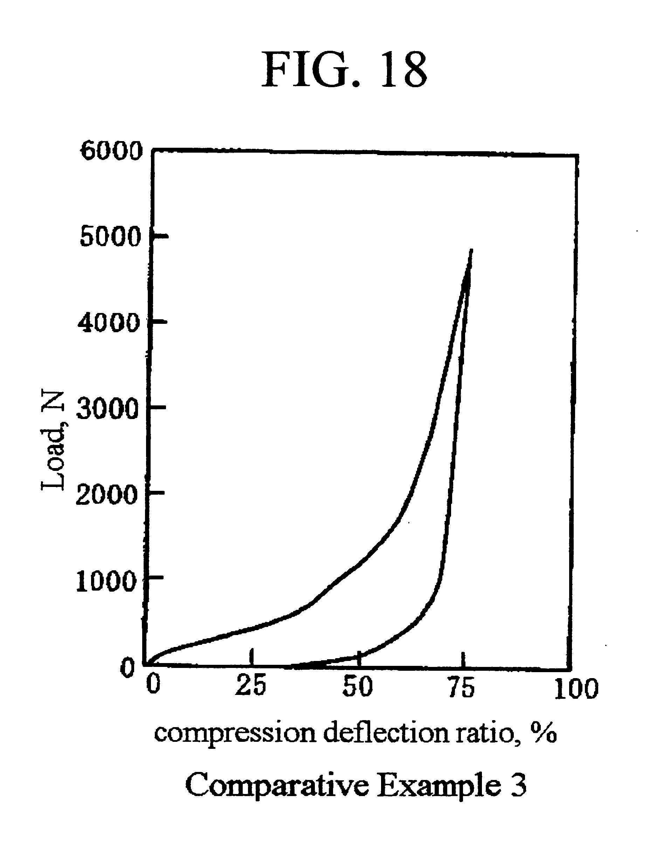

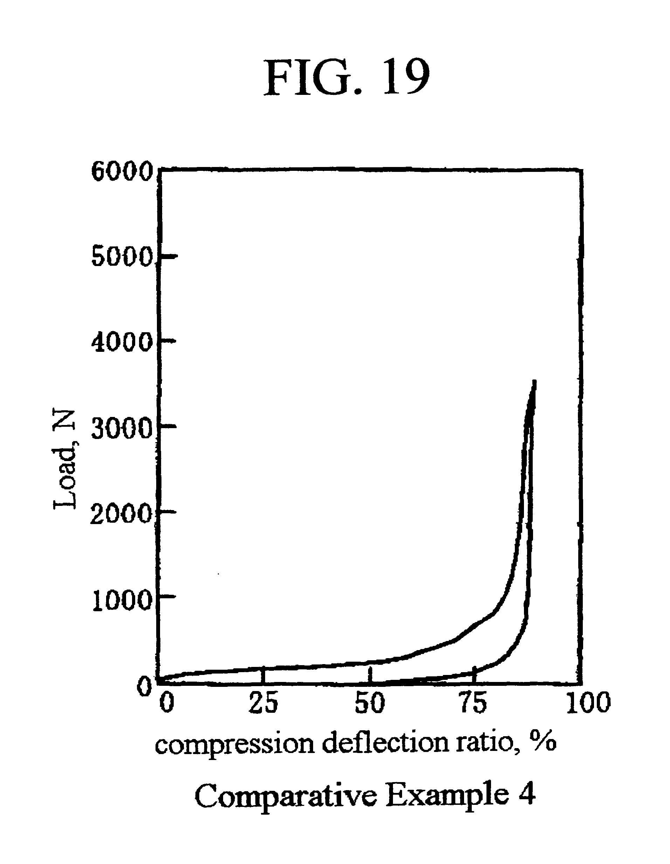

The test was carried out in conformity with the JIS K 6400 soft polyurethane foam-testing method Appendix (reference) 1. The size of test pieces is 300 (W) $\times$ 300 (L) $\times$ 50 (T). Diagrammatic views showing load-compression deflection ratios are shown in FIGS. 5 to 19.

Cushion elements having a spring structure, which are all of Examples, and a polyurethane foam, which is Comparative Example, 1 are compared with each other. None of Examples have a noticeable yield point which is found in Comparative Example 1. This means that the cushion elements have a small quantity of local sinkage, thereby making it possible to uniformly receive load on a whole region in contact with a cushion structure.

Next, in Comparative Example 1, a rise of load is recognized when the deflection ratio exceeds 50 %, while such a rise is not recognized in any of Examples. Further, in all Examples, the three-dimensional structure can be effectively deformed up to about 90 % of thickness thereof. This shows that the structure does not provide a bottom touching feeling to a user, and that it can be quickly restored upon removal of load therefrom, that is, the three-dimensional structure has a high setting resistance.

Next, the cushion elements having a spring structure, which are all of Examples, and Comparative Examples 2 to 4, which are the conventional spring structures, are compared with each other. Comparative Example 2 has a yield point, requires a high load relative to compression deflection, undergoes plastic deformation, and does not exhibit elastic recovery. Although Comparative Examples 3 and 4 do not have a yield point, a rise of load is recognized when the deflection ratio thereof exceeds 50 %, which means that they give a bottom touching feeling to a user. Further, they undergo plastic deformation, and does not exhibit elastic recovery.

If the compounding ratios between the resin materials and the bulk density are changed, it is possible to produce a cushion structure with desired hardness.

Test 2: Residual distortion after repeated compression

The test was carried out in conformity with the JIS K 6400 soft polyurethane foam-testing method 8.1A. The size of test pieces is 300(W) × 300 (L) × 50(T).
The test was executed on the narrowed range of objects: Example 2 (PE + VAC, bulk density 0.03), Comparative Example 1, and Comparative Example 3 (PP, bulk density 0.03). Results of the tests are shown in Table 11.

Table 11
Results of measurement of residual distortion after repeated compression

| | Residual distortion after repeated compression (%) |
|---|---|
| Example 1 | 93 |
| Comparative Example 1 | 95 |
| Comparative Example 3 | 75 |

Example 1 and Comparative Example 1 show that they have the same level of performance. Although Example 2 and Comparative Example 3 have the same structure and are different only in resin, the residual distortion of Comparative Example 3 which undergoes plastic deformation is sharply reduced to 75 %. The resin molded article according to the invention has the same level of setting resistance as that of a polyurethane foam.

Test 3: Impact resilience

The test was carried out in conformity with the JIS K 6400 soft polyurethane foam-testing method 9.2B. The size of a test piece is 300 (W) x 300 (L) x 50 (T). Objects of the test are the same as Test 2. Results of the test are shown in Table 1 Z.

Table 12 Measurement results of impact resilience ratios

| | Impact resilience (%) |
|---|---|
| Example 1 | 91 |
| Comparative Example 1 | 65 |
| Comparative Example 3 | 70 |

The resin molded article according to the invention has impact resilience 1.4 times as high as that of a polyurethane foam.
Although it is difficult to recycle a polyurethane foam, the resin molded article according to the invention can be regenerated into a product after it is used and hence it is excellent in recyclability.
The resin molded article according to the invention can be manufactured at reduced costs since recycled resins can be used for producing the same.
The resin molded article does not give a bottom touching sense, and has a very small quantity of local sinkage, thereby making it possible to uniformly receive load on a whole region in contact with the cushion structure. Hence, the article causes less fatigue of the user than a polyurethane foam.
Since the resin molded article according to the invention has a structure having completely continuous voids, it is more excellent in air permeability than a polyurethane foam.
Although in manufacturing the polyurethane foam, toxic materials, such as TDI and the like, are used, the resin molded article of the present invention can be produced without generating toxic gases and hence ensures good working conditions.
According to the invention, it is possible to recycle regenerated resins with high added values.

**Claims**

1.  A resin molded article (30) having a spring structure, comprising a three-dimensional structure with voids at a predetermined bulk density,
    said three-dimensional structure having contacted, entwined and gathered adjacent random loops or curls of solid and/or hollow continuous filaments and/or of solid and/or hollow short filaments,
    the filaments having a mixture ratio of solid filaments (referred to as "X") to hollow filaments (referred to as "Y") such that $0 \leqq X \leqq 50$, and $50 \leqq Y \leqq 100$ in case mixing both of said filaments, and
    both of said filaments being made from a mixture of a polyolefin resin and VAC, EVA or SBS,
    wherein said article has a uniform thickness
    **<u>characterized in that</u>**,
    said three-dimensional structure has a bulk density of 0.001 to 0.08 g/cm$^3$,
    wherein said three-dimensional structure has a low density portion having a bulk density of 0.005 to 0.03 g/cm$^3$, and a high density portion having a bulk density of 0.03 to 0.08 g/cm$^3$ in a direction of width thereof, at appropriate space intervals in a direction of length thereof.

2.  The resin molded article (30) according to claim 1, wherein said three-dimensional structure has voids providing each portions of low and high bulk densities.

3.  The resin molded article (30) according to claim 1 or 2, a mixture ratio of said polyolefin resin to said VAC or said EVA is 70 to 97 wt% : 3 to 30 wt%, preferably, 80 to 90 wt% : 10 to 20 wt%.

4.  The resin molded article according to any one of claims 1 to 3, wherein a mixture ratio of said polyolefin resin to said SBS is 50 to 97 wt% : 3 to 50 wt%, preferably, 70 to 90 wt% : 10 to 30 wt%.

5.  The resin molded article (30) according to claim 1, the continuous and/or short filaments are made of a thermoplastic elastomer.

6.  The resin molded article (30) according to claim 1 or 2, wherein said solid continuous filaments and/or short filaments have a diameter of 0.3 mm to 3.0 mm, preferably 0.7 to 1.0 mm, and said hollow continuous filaments and/or short filaments have a diameter of 1.0 mm to 3.0 mm, preferably 1.5 to 2.0 mm.

7.  The resin molded article (30) according to any one of claims 1 to 6, wherein said three-dimensional structure is a cushion material for seats of an automotive vehicle or a bed.

8.  The resin molded article (30) according to any one of claims 1 to 6, wherein said three-dimensional structure has a bulk density of 0.005 to 0.03 g/cm$^3$, preferably 0.008 to 0.03 g/cm$^3$, particularly preferably 0.01 to 0.03 g/cm$^3$ at low density portions, and a bulk density of 0.03 to 0.08 g/cm$^3$, preferably 0.04 to 0.07 g/cm$^3$, particularly preferably 0.05 to 0.06 g/cm$^3$ at high density portions.

9.  The resin molded article (30) according to claim 8, wherein said three-dimensional structure has a void ratio of 96 to 99 %, preferably 97 to 99 %, and particularly preferably 97 to 98 % at said low density portions, and a void ratio of 91 to 97 %, preferably 92 to 96 %, and particularly preferably 93 to 94 % at said high density portions.

10. The resin molded article (30) according to any one of claims 1 to 6, wherein hollow filaments are used in a central portion of the structure, and are covered with solid ones.

11. A method of producing a resin molded article (30) having a spring structure, by melt-extruding a mixture of a polyolefin resin and VAC, EVA or SBS into a plurality of filaments, and contacting, entwining and gathering adjacent random loops or curls of solid and/or hollow continuous filaments and/or solid and/or hollow short filaments, and the filaments have a mixture ratio of solid filaments (referred to as "X") to hollow filaments (referred to as "Y") such that $0 \leqq X \leqq 50$, and $50 \leqq Y \leqq 100$ in case mixing both of said filaments, thereby forming a three-dimensional structure with voids at a bulk density of 0.001 to 0.08g/cm$^3$ having a uniform thickness, wherein a take-off speed for taking off the extruded continuous filaments is changed to thereby form a low density portions having a bulk density of 0.005 to 0.03 g/cm$^3$ and a high density portion having a bulk density of 0.03 to 0.08 g/cm$^3$, and said low density portion and said high density portion, each of which extend in a direction of width of said three-dimensional structure and are arranged at appropriate space intervals in a direction of length of said three-dimensional structure.

**Patentansprüche**

1. Formteil (30) aus Kunststoff mit einer elastischen Struktur, umfassend eine dreidimensionale Struktur mit Freiräumen und mit einer vorgegebenen Schüttdichte,

   wobei diese dreidimensionale Struktur in Kontakt gebrachte, umschlungene und gekräuselte benachbarte willkürlich angeordnete Maschen oder Kräusel aus festen und/oder hohlen kontinuierlichen Filamenten und/oder festen und/oder hohlen kurzen Filamenten aufweist,

   wobei die Filamente ein Mischungsverhältnis von festen Filamenten (hierin als "X" bezeichnet") und hohlen Filamenten (hierin als "Y" bezeichnet") aufweisen, so dass $0 \leq X \leq 50$ und $50 \leq Y \leq 100$, in dem Fall, dass beide Filamente miteinander vermischt sind, und dass

   beide Filamente aus einem Gemisch eines Polyolefinharzes und VAC, EVA oder SBS hergestellt sind,

   wobei dieses Formteil eine einheitliche Dicke aufweist,

   **dadurch gekennzeichnet, dass**

   diese dreidimensionale Struktur eine Schüttdichte von 0.001 bis 0.08 g/cm$^3$ aufweist,

   wobei diese dreidimensionale Struktur einen Anteil geringer Dichte aufweist mit einer Schüttdichte von 0.005 bis 0.03 g/cm$^3$, und

   einen Anteil hoher Dichte mit einer Schüttdichte von 0.03 bis 0.08 g/cm$^3$ in einer Breitenrichtung, bei geeigneten Zwischenräumen in der Längenrichtung.

2. Formteil (30) aus Kunststoff nach Anspruch 1, bei dem die dreidimensionale Struktur Freiräume aufweist, die jeweils die Anteile niedriger und hoher Schüttdichte liefern.

3. Formteil (30) aus Kunststoff nach Anspruch 1 oder 2, bei dem das Mischungsverhältnis des Polyolefinharzes zu dem VAC oder EVA 70 bis 97 Gew. % : 3 bis 30 Gew. % beträgt, vorzugsweise 80 bis 90 Gew. % : 10 bis 20 Gew. %.

4. Formteil aus Kunststoff gemäß einem der Ansprüche 1 bis 3, bei dem das Mischungsverhältnis von Polyolefinharz zu SBS 50 bis 97 Gew. % : 3 bis 50 Gew. % ist, vorzugsweise 70 bis 90 Gew. % : 10 bis 30 Gew. %.

5. Formteil (30) aus Kunststoff gemäß Anspruch 1, bei dem die kontinuierlichen und/oder kurzen Filamente aus einem thermoplastischen Elastomeren hergestellt sind.

6. Formteil (30) aus Kunststoff gemäß Anspruch 1 oder 2, bei dem die festen kontinuierlichen Filamente und/oder kurzen Filamente einen Durchmesser von 0.3 mm bis 3.0 mm, vorzugsweise 0.7 bis 1.0 mm haben, und die hohlen kontinuierlichen Filamente und/oder kurzen Filamente einen Durchmesser von 1.0 mm bis 3.0 mm, vorzugsweise 1.5 bis 2.0 mm haben.

7. Formteil (30) aus Kunststoff gemäß einem der Ansprüche 1 bis 6, bei dem die dreidimensionale Struktur ein Polstermaterial für Sitze eines Automobils oder für ein Bett ist.

8. Formteil (30) aus Kunststoff gemäß einem der Ansprüche 1 bis 6, bei dem die dreidimensionale Struktur eine Schüttdichte von 0.005 bis 0.03 g/cm$^3$, vorzugsweise 0.008 bis 0.03 g/cm$^3$, besonders bevorzugt 0.01 bis 0.03 g/cm$^3$ in den Bereichen geringer Dichte, und eine Schüttdichte von 0.03 bis 0.08 g/cm$^3$, vorzugsweise 0.04 bis 0.07 g/cm$^3$, besonders bevorzugt 0.05 bis 0.06 g/cm$^3$ in den Bereichen hoher Dichte aufweist.

9. Formteil (30) aus Kunststoff gemäß Anspruch 8, bei dem die dreidimensionale Struktur einen Freiraumanteil von 96 bis 99 %, vorzugsweise 97 bis 99 %, und besonders bevorzugt 97 bis 98 % in den Bereichen geringer Dichte aufweist, und einen Freiraumanteil von 91 bis 97 %, vorzugsweise 92 bis 96 %, und besonders bevorzugt von 93 bis 94 % in den Bereichen hoher Dichte.

10. Formteil (30) aus Kunststoff gemäß einem der Ansprüche 1 bis 6, bei dem hohle Filamente in einem zentralen Bereich der Struktur verwendet werden und mit festen Filamenten bedeckt werden.

11. Verfahren zur Herstellung eines Formteils (30) aus Kunststoff mit einer elastischen Struktur durch Schmelzextrudieren einer Mischung aus einem Polyolefinharz und VAC, EVA oder SBS in eine Mehrzahl von Filamenten und in Kontakt bringen, Umschlingen und Kräuseln benachbarter willkürlich angeordneter Maschen oder Kräusel aus festen und/oder hohlen kontinuierlichen Filamenten und/oder festen und/oder hohlen kurzen Filamenten, wobei die Filamente ein Mischungsverhältnis von festen Filamenten (hierin als "X" bezeichnet") und hohlen Filamenten (hierin als "Y" bezeichnet") aufweisen, so dass $0 \leq X \leq 50$ und $50 \leq Y \leq 100$, in dem Fall, dass beide Filamente miteinander vermischt sind und dabei eine dreidimensionale Struktur mit Freiräumen bilden und mit einer Schüttdichte von 0.001 bis 0.08 g/cm$^3$ und einheitlicher Dicke, wobei eine Abnahmegeschwindigkeit für die Abnahme der extrudierten kontinuierlichen Fasern verändert wird, um so Bereiche mit niedriger Dichte zu bilden, die eine Schüttdichte von 0.005 bis 0.03 g/cm$^3$ aufweisen und Bereiche mit hoher Dichte mit einer Schüttdichte von 0.03 bis 0.08 g/cm$^3$, wobei die Bereiche geringer Dichte und die Bereiche hoher Dichte sich jeweils in Richtung der Breite der dreidimensionalen Struktur erstrecken und in geeigneten Zwischenraumabständen in Richtung der Länge der dreidimensionalen Struktur angeordnet sind.

**Revendications**

1. Article moulé en résine (30) ayant une structure de ressort, comprenant une structure en trois dimensions avec des vides ayant une masse volumique apparente prédéterminée,
ladite structure en trois dimensions comportant des boucles ou vrilles aléatoires adjacentes en contact, entrelacées et rassemblées de filaments continus pleins et/ou creux et/ou de filaments courts pleins et/ou creux,
les filaments ayant un rapport de mélange entre filaments pleins (désignés par « X ») et filaments creux (désignés par « Y ») tel que 0.X.50, et 50.Y.100 dans le cas du mélange desdits deux filaments, et
lesdits deux types de filaments étant constitués d'un mélange d'une résine de poly(oléfme) et de VAC, EVA ou SBS, ledit article ayant une épaisseur uniforme
**caractérisé en ce que**
ladite structure en trois dimensions a une masse volumique apparente de 0,001 à 0,08 g/cm$^3$,
ladite structure en trois dimensions a une portion de basse densité ayant une masse volumique apparente de 0,005 à 0,03 g/cm$^3$, et
une portion de haute densité ayant une masse volumique apparente de 0,03 à 0,08 g/cm$^3$ dans une direction de sa largeur, à des intervalles d'espace appropriés dans une direction de sa longueur.

2. Article moulé en résine (30) selon la revendication 1, dans lequel ladite structure en trois dimensions comporte des vides fournissant chacun des portions de basses et hautes masses volumiques apparentes.

3. Article moulé en résine (30) selon la revendication 1 ou 2, dans lequel un rapport de mélange entre ladite résine de poly(oléfine) et ledit VAC ou ledit EVA est de 70 à 97 % en poids : 3 à 30 % en poids, de préférence de 80 à 90 % en poids : 10 à 20 % en poids.

4. Article moulé en résine selon l'une quelconque des revendications 1 à 3, dans lequel un rapport de mélange entre ladite résine de poly(oléfine) et ledit SBS est de 50 à 97 % en poids : 3 à 50 % en poids, de préférence de 70 à 90 % en poids : 10 à 30 % en poids.

5. Article moulé en résine (30) selon la revendication 1, dans lequel les filaments continus et/ou courts sont constitués d'élastomère thermoplastique.

6. Article moulé en résine (30) selon la revendication 1 ou 2, dans lequel lesdits filaments continus pleins et/ou filaments courts ont un diamètre de 0,3 mm à 3,0 mm, de préférence de 0,7 à 1,0 mm, et lesdits filaments continus creux et/ou filaments courts ont un diamètre de 1,0 mm à 3,0 mm, de préférence de 1,5 à 2,0 mm.

7. Article moulé en résine (30) selon l'une quelconque des revendications 1 à 6, dans lequel ladite structure en trois dimensions est un matériau de coussin pour des sièges d'un véhicule automobile ou d'un lit.

8. Article moulé en résine (30) selon l'une quelconque des revendications 1 à 6, dans lequel ladite structure en trois dimensions a une masse volumique apparente de 0,005 à 0,03 g/cm$^3$, de préférence de 0,008 à 0,03 g/cm$^3$, de façon particulièrement préférée de 0,01 à 0,03 g/cm$^3$ au niveau de portions de basse densité, et une masse volumique apparente de 0,03 à 0,08 g/cm$^3$, de préférence de 0,04 à 0,07 g/cm$^3$, de manière particulièrement préférée de 0,05 à 0,06 g/cm au niveau de portions de haute densité.

9. Article moulé en résine (30) selon la revendication 8, dans lequel ladite structure en trois dimensions a un rapport de vide de 96 à 99 %, de préférence de 97 à 99 %, et de manière particulièrement préférée de 97 à 98 % au niveau desdites portions de basse densité, et un rapport de vide de 91 à 97 %, de préférence de 92 à 96 %, et de manière particulièrement préférée de 93 à 94 % au niveau desdites portions de haute densité.

**10.** Article moulé en résine (30) selon l'une quelconque des revendications 1 à 6, dans lequel des filaments creux sont utilisés dans une portion centrale de la structure, et sont couverts par des filaments pleins.

**11.** Procédé de production d'un article moulé en résine (30) ayant une structure de ressort, par extrusion en fusion d'un mélange d'une résine de poly(oléfine) et de VAC, EVA ou SBS en une pluralité de filaments, et mise en contact, entrelacement et rassemblement de boucles ou vrilles aléatoires adjacentes de filaments continus pleins et/ou creux et/ou de filaments courts pleins et/ou creux, les filaments ayant un rapport de mélange entre filaments pleins (désignés par « X ») et filaments creux (désignés par « Y ») tel que 0.X.50, et 50.Y.100 dans le cas du mélange desdits deux filaments, formant ainsi une structure en trois dimensions avec des vides à une masse volumique apparente de 0,001 à 0,08 g/cm$^3$ ayant une épaisseur uniforme, où une vitesse de décollement pour décoller les filaments continus extrudés est modifiée pour former ainsi une portion de basse densité ayant une masse volumique apparente 0,005 à 0,03 g/cm$^3$, et une portion de haute densité ayant une masse volumique apparente de 0,03 à 0,08 g/cm$^3$ et ladite portion de basse densité et ladite portion de haute densité, dont chacune s'étend dans une direction de la largeur de ladite structure en trois dimensions, et est agencée à des intervalles d'espace appropriés dans une direction de la longueur de ladite structure en trois dimensions.

# FIG. 1

Method 1

Method 2

Method 3

# FIG. 2

FIG. 3

# FIG. 4

EP 1 182 286 B1

# FIG. 5

Example 1

# FIG. 6

compression deflection ratio, %

## Example 2

# FIG. 7

Example 3

# FIG. 8

compression deflection ratio, %

Example 4

# FIG. 9

Example 5

# FIG. 10

Example 6

# FIG. 11

compression deflection ratio, %

Example 7

# FIG. 12

Example 8

# FIG. 13

Example 9

# FIG. 14

Example 10

# FIG. 15

Example 11

# FIG. 16

compression deflection ratio, %

Comparative Example 1

# FIG. 17

compression deflection ratio, %

Comparative Example 2

# FIG. 18

compression deflection ratio, %

Comparative Example 3

# FIG. 19

compression deflection ratio, %

Comparative Example 4

**EP 1 182 286 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000051011 A
- JP 2995325 B
- JP 2548477 B
- US 5972463 A